# EUROPEAN PATENT APPLICATION

(11) **EP 0 548 709 A2**
(43) Date of publication of application: **30.06.1993**
(21) Application number: 92121137.1
(22) Date of filing: 11.12.1992
(51) Int. Cl.: G06F 3/033

(54) **Controlling display and direct manipulation of a plurality of windows**

(30) Priority: 20.12.1991 US 811345
(71) Applicant: INTERNATIONAL BUSINESS MACHINES CORPORATION, Armonk, N.Y. 10504 (US)
(72) Inventor: Scannell, Peter, Carrollton, TX 75007 (US); Torres, Robert J., Carrollton, TX 76034 (US)
(74) Representative: Zerbi, Guido Maria

(57) **Abstract**

Direct user management of the display of a plurality of objects, particularly opened windows, on the display surface of a computer monitor. At least one window is identified by the user for priority display. The computer system generates a priority ordering for the opened windows independent of identification of a window for priority display. Responsive to the current ordering the computer assigns a display space on the display surface to at least the first window in the ordering. Windows lower in the ordering receive assignment of display space to the extent display space is available. Responsive to user initiated action, the computer will temporarily assign display space to the window identified for priority display notwithstanding a possibly lower priority ordering to other overlapping windows. Such overlapping windows as have previously been assigned display space are altered in appearance to avoid obscuration of the identified window. Direct manipulation of the altered windows is blocked subject to release of the user initiated action.

## Description

The invention relates in general to a multi-window display system and method for controlling display and direct manipulation of a plurality of windows. Still more particularly, the invention relates to suppressing direct manipulation attributes and modifying visual attributes of windows having superior priority for imaging to the surfaced window while fully imaging the surfaced window in a system having a plurality of simultaneously active applications displayed in overlapping windows.

A user interface for a computer has input and output components which, in combination, allow a user to interact with and perform operations on a computer. Examples of input components are the keyboard and the mouse. Output components include the monitor or cathode ray tube "CRT". The computer interprets entries made on the keyboard and translates data into a visible image on the monitor.
Generation of video data for a raster scanned CRT is well understood. A CRT controller is used to generate memory addresses for a display refresh buffer. A selector, interposed between the controller and the buffer, is used to provide an alternate source of addressing so that the contents of the refresh buffer can be modified. Thus, the selector may pass the refresh address from the controller or an address on the system address bus to the display refresh buffer. By time division multiplexing ("TDM") the refresh buffer bandwidth interference between refresh and system accesses can be eliminated.
A number of operating system ("OS") programs and application programs allow a computer to carry on multiple tasks simultaneously. For example, a background data processing task might be carried on with a foreground word processing task. Related to the background data processing task might be a graphics generation task for producing pie or bar charts from the data generated in the data processing task. The data in all these tasks might be merged to produce a single document.
The multi-tasking operation may be performed by a single computer such as one of the more popular micro computers now on the market, or it may be performed by a micro computer connected to a host computer. In the latter case, the host computer generally carries out the background data processing functions, while the micro computer carries out the foreground operations relating to display of information.

By creating a composite display refresh buffer, the system can also be used to display windows from multiple tasks. Each task is independent of the others and occupies non-overlapping space in the system memory. User-definable windows for the tasks resident in system memory can be constructed so as to display, within the limits imposed by the screen size, data from each of the tasks being processed.
From the user perspective, windows can be displayed as either non-overlapping, layered, or overlapping. An overlapping display does not imply lost data in the system memory. It is necessary topreserve the data for each task so that as an obscuring window is moved about the display screen or even removed from the display screen, the underlying display data can be viewed by updating the refresh buffer.
User interfaces for computers are broadly categorized as being of three types: (1) Command Line User Interfaces, which require a user to remember commands and to type those commands to initiate a process on a computer; (2) Menu-driven User Interfaces, in which the computer generates choices, by hierarchically organized and represented by names; and (3) Graphical User Interfaces ("GUI"), in which visible images are displayed on the monitor and the user uses a mouse or similar device to point to and interact with the objects through representative visible images. Windows are commonly associated with Graphical User Interfaces.
Graphical User Interfaces, in common usage, include in combination, graphics, the "object-action" paradigm, the use of pointing devices for manipulation of objects, icons and windows. The window is a pivotal feature of the interface for this patent. Visually, the window is an area imaged on the display screen of a monitor. It has a visible boundary within which an object may be displayed or a dialog with the computer conducted. A window may be subject to direct manipulation techniques, i.e. the tools by which the object-action paradigm is carried out. For example, an object can be selected by a mouse pointer by moving a pointer imaged on a screen to an object and pressing the "select button." The user may then do things to the object such as moving it (known as "dragging") or, in the case of a window, closing the object.
An opened window can be entirely covered by later opened windows, preventing viewing of the covered window absent closing or moving the later opened windows. A window, though opened, is available for direct manipulation only to the extent it is visible. Thus a covered window cannot be moved on the display screen until it is uncovered.

Thus, it is an object of the invention to provide methods to control the display of a plurality of windows in a display image.

It is another object of the invention to provide temporary display of a buried window upon user request.

It is still another object of the invention to provide for suppressing direct manipulation and limiting visual aspects of a window having locally superior priority for display while fully imaging an underlying imageable object in accordance with its visual and direct manipulation control attributes.

The foregoing objects are achieved by the invention as claimed.
The method and system of the present invention allows direct user management of the display of a plurality of objects, particularly opened windows, on the display surface of a visual display device, such as a monitor in a computer system. At least one window object is identified by the user for priority display at user request. The computer system generates a display order for the opened windows, including from time-to-time, the window identified for priority display. Responsive to a current display order, the computer assigns a display space on the display surface to at least a first window. Windows lower in the ordering receive assignment of display area to the extent available. Responsive to user initiated action, the computer assigns display space to the window identified for priority display notwithstanding a lower display order position to other overlapping windows. The current screen image is regenerated in half tones, then painted to the screen. The priority display window is then painted to the screen in full tones. Alternatively, the painting order may be reversed to create the impression that a transparency of the original screen is overlaid on the priority display window. Direct manipulation of the objects of the original screen is blocked subject to release of the priority display window.

The foregoing and other objects, features and advantages of the invention will be apparent from the following more particular description of the preferred embodiment of the invention, as illustrated in the accompanying drawings.
Figure 1 is a pictorial representation of a personal computer with which the present invention may be practiced;
Figure 2 is a high-level block diagram of a software organization used with the personal computer of Figure 1;
Figure 3 is a pictorial representation of a display image of a plurality of windows on a display surface of a user interface;
Figure 4 is a pictorial representation of a display image of a plurality of windows including a surfaced window on a display surface of a user interface;
Figure 5 is a pictorial representation of a display image of a plurality of windows including a surfaced window on a display surface of a user interface;
Figure 6 is a logical flowchart illustrating the selection of operating options provided by the method of the present invention;
Figure 7 is a logical flowchart illustrating the technique for constructing a linked group of objects as a layer for surfacing according to the method of the present invention;
Figure 8 is a logical flowchart illustrating the technique for surfacing a default layer according to the method of the present invention;
Figure 9 is a logical flowchart illustrating the technique for scrolling a series of layers to the surface of a display screen;
Figure 10 is a logical flowchart illustrating the technique for generating a pop-up window listing layer choices for surfacing;
Figure 11 is a logical flowchart illustrating a technique for generating half-tone representations of a display screen image; and
Figure 12 is a logical flowchart illustrating a technique for combining a surfaced layer display image and a half-tone representation of a screen to produce a surfaced effect.

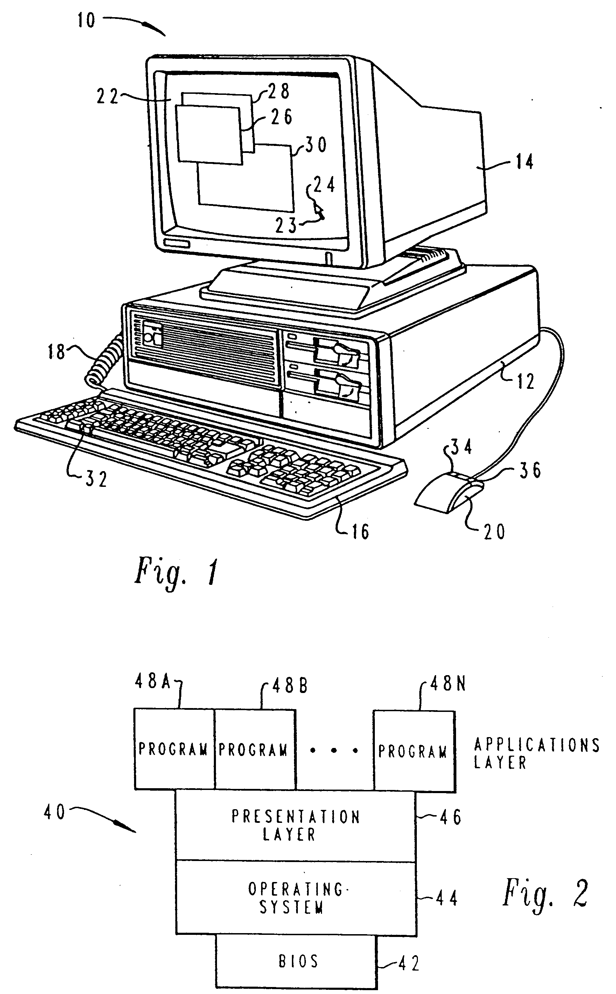

With reference now to the figures and in particular with reference to Figure 1, there is depicted a pictorial representation of a personal computer system 10 which may be utilized in practicing the present invention. Computer system 10 is preferably provided by utilizing an IBM PS/2 Personal Computer 12 or other similar system. Personal computer system 10 includes a video monitor 14 and a keyboard 16. Keyboard 16 is connected to a mother board within computer 12 by a cord 18. Mouse controller 20 is connected to a mother board within computer 12 by a cord, or alternately, as shown in the drawing, mouse controller 20 is connected to keyboard 16. Keyboard 16 and mouse 20 are utilized by an operator to provide inputs to personal computer system 10. Information is returned to the user on the display screen 22 of video monitor 14. Displayed on video screen 22 are a mouse pointer 24 and three windows 26, 28 and 30. Windows 26-30 have a Z-axis ordering which results in window 26, having priority for display over windows 28 and 30. Window 26 is allocated display space allowing its full display. The display space allocated windows 28 and 30 is abbreviated giving the appearance of concealment of a portion of each of windows 28 and 30.
Mouse pointer 24 is utilized by an operator to identify objects imaged on display screen 22 for selection or to engage the so-called object/action paradigm of the user interface. Mouse select button 34 and mouse manipulation button 36 are utilized in connection with these functions. In addition the control key 32 of keyboard 16 is used as a selection mechanism to initiate priority display of a particular window or object on display screen 22.

Figure 2 is a block diagram representation of software organization 40 utilized by contemporary personal computers. A basic input/output system (BIOS) 42 provides control of basic hardware operations of the computer, particularly the transfer programs from peripheral storage devices such as disk drives to addressable computer memory. BIOS 42 is a program stored in nonvolatile memory and provides an initial starting point for computer system operation upon turning a computer on. Upon power up, BIOS 42 controls the transfer of operating system 44 from peripheral memory devices to addressable computer memory. The preferred operating system for practicing the present invention is the Personal System/2 operating system available from International Business Machines Corporation. The operating system of any personal computer controls the execution of application programs. A presentation layer 46 lies on top of operating system 44 and below a plurality of application programs 48a-48n. Presentation layer 46 is preferably provided by the Presentation Manager system available from International Business Machines Corporation. Presentation layer 46 provides a common syntax for all application programs in presenting information to a computer operator. Presentation layer 46 provides such well known interface elements such as windows, icons, a desktop metaphor supported by the object/action paradigm, graphing capabilities and the like. The programs 48a-48n of the application layer are the common tools utilized by most users, such as document processing, spreadsheets, games, database managers and other applications.

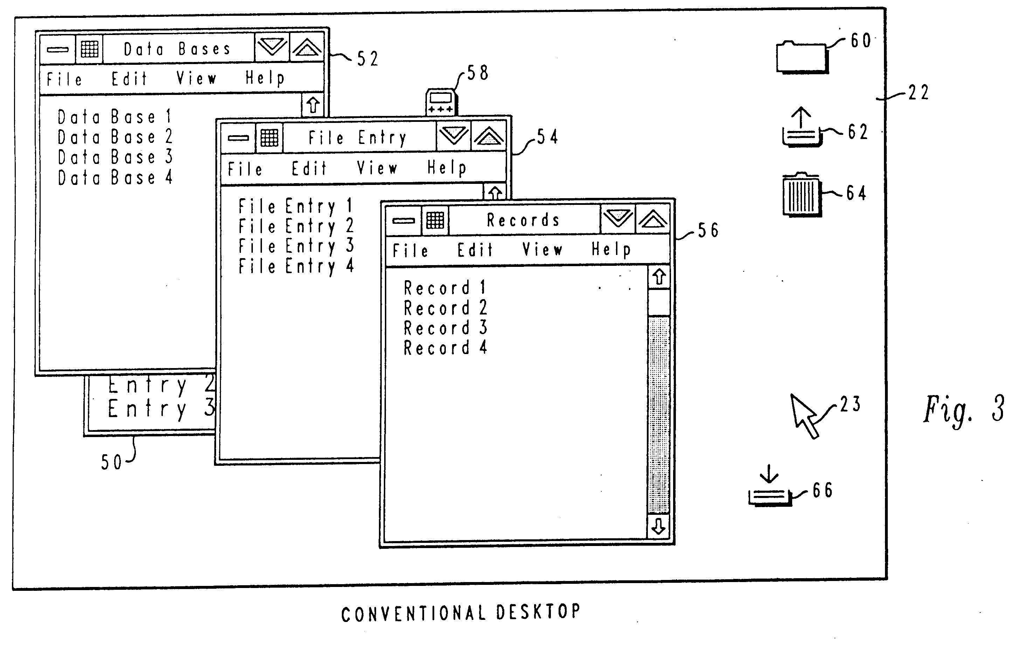

Figure 3 is a pictorial representation of a display screen 22 onto which a desktop metaphor has been imaged. A pointer 23 is available for selection of items and with which to carry out the object action paradigm which contemporary graphic user interface application programs support. Four windows 50, 52, 54 and 56 have been opened in order of their numbering onto the display screen 22. Windows 50, 52, 54 and 56 overlap one another to varying degrees. In addition, the desktop metaphor includes a calculator icon 58, a folder icon 60, an out basket icon 62, trash can icon 64 and an in basket icon 66. Because display screen 22 is a two dimensional surface, fully imaged windows which overlap cannot both be fully displayed. Accordingly, a Z-ordering for all imageable objects available for display on display screen 22 has been generated. Individual objects having superior positions in the Z-ordering receive display space to the exclusion of objects with inferior Z-order positions. Thus, window 56 obliterates a portion of window 54. Window 54 in turn obliterates a portion of calculator icon 58 and window 52. Windows 54 and 52 obliterate most of window 50. Windows earlier opened onto display screen 22 may be completely obscured by windows 56, 54, 52 or 50.

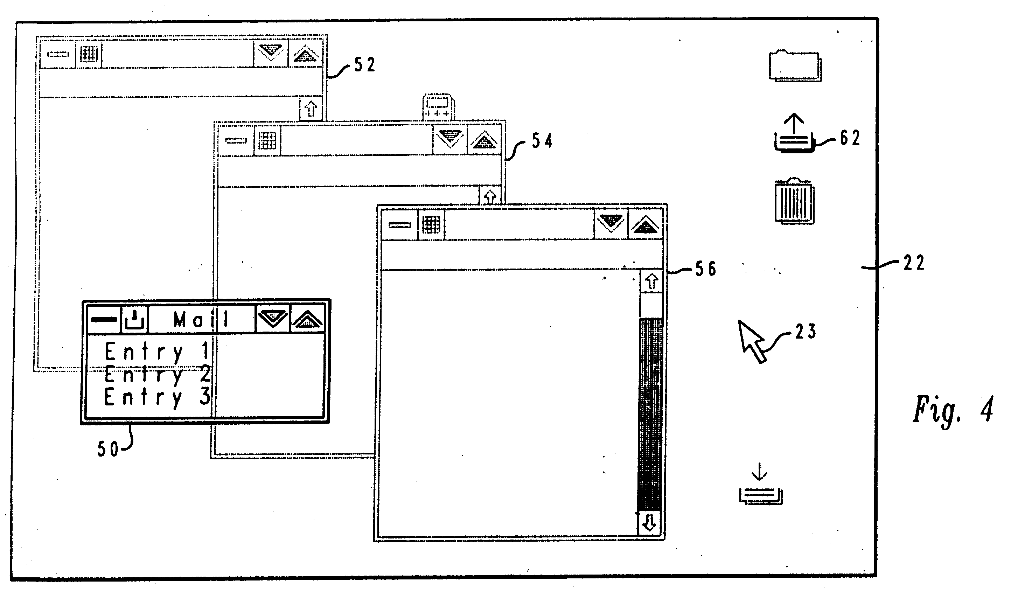

Figure 4 is a pictorial representation of a display image of a plurality of windows in which the imageable objects of a priority display or surfaceable layer have been surfaced. Window 50 and icon 62 are imageable member objects of the priority display layer.
Upon election by a user to bring a priority display layer to the surface of screen 22, non-members of the layer that were previously displayed are reduced to half-tones. Members of the priority display layer are painted in full-tones and enabled for direct manipulation by mouse pointer 23. Windows 52 and 54, in half-tone, have been painted over window 50 and appear as a transparency over window 50. They do not obscure reading of the list appearing in the display field of the window 50. Objects from window 50 may be dragged to out basket icon 62.

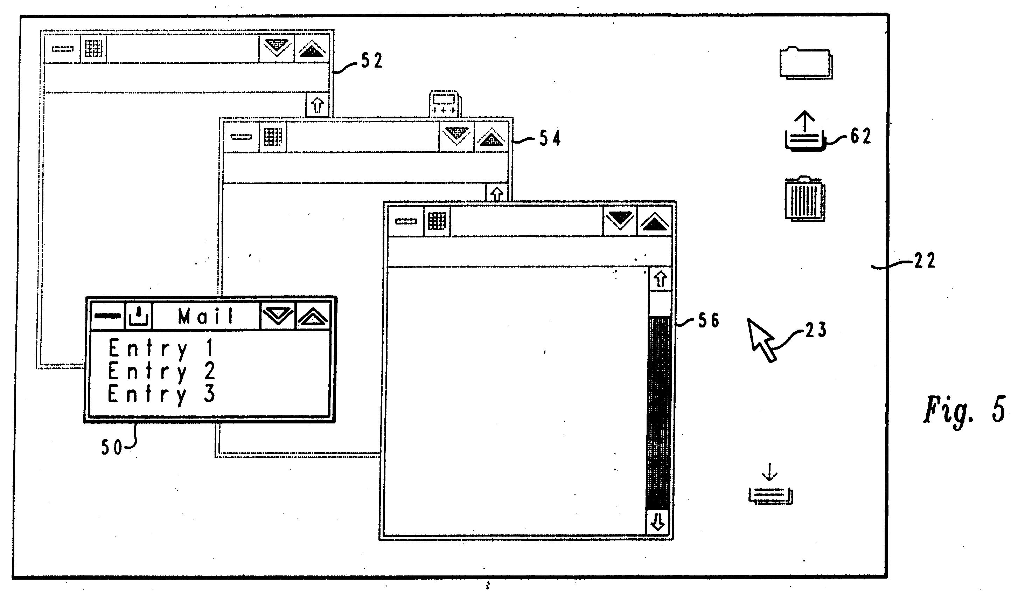

Figure 5 is a pictorial representation of an alternate embodiment of the invention. Display image of Figure 5 is essentially identical to that of Figure 4, save that the surfaceable layer comprising window 50 and icon 62 has been painted in full-tones over the imageable objects which have been painted in half-tones. Thus the border outlines of windows 52 and 54 no longer appear to pass over window 50, but rather are obscured by window 50.

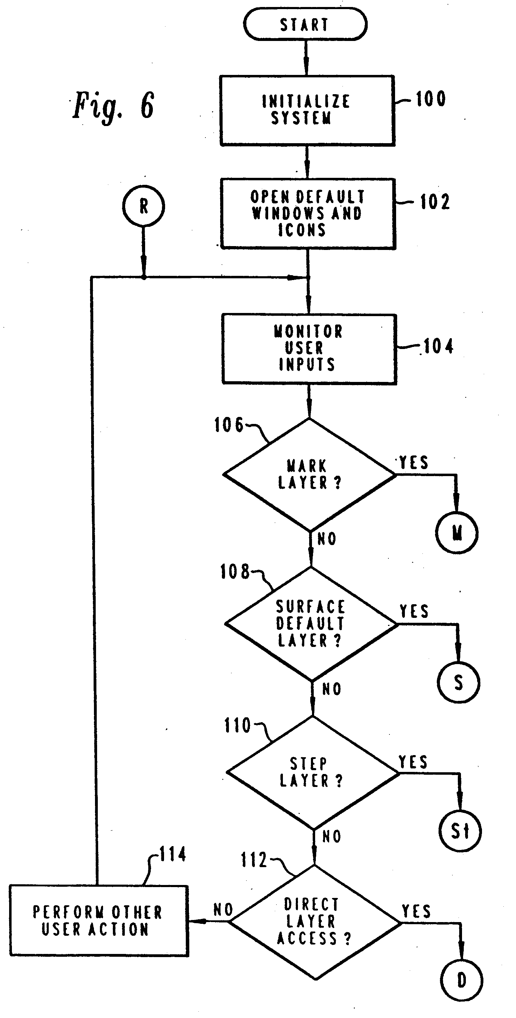

Figure 6 is a flowchart illustrating operating aspects of the method of the present system. Upon entry to the routine, the data processing system is initialized at step 100. Next, at step 102, default windows and icons of the desktop metaphor, or other display environment, are imaged. At step 104, the system begins monitoring for user inputs, particularly those related to modification of the display screen image. At step 106, it is determined if a user has elected to identify a priority display layer. The YES branch from step 106 passes execution to a subroutine identified by the letter "M", indicating the user wishes to mark such a layer. Subroutine "M" is described below. The NO branch from step 106 advances operation to step 108 where it is determined if a user has requested surfacing of a particular priority display window identified by the user as the default upon request for a surface operation layer. The YES branch from step 108 passes execution to a subroutine indicated by the letter "S", while the NO branch results in determination at step 110 of whether a user has requested a linear step type operation relating to the display screen images. The YES branch from step 110 passes execution to a subroutine indicated by the letters "St" for a step operation through the layers, while the NO branch advances execution to step 112. At step 112, it is determined if a user has requested direct access to a priority display layer. The YES branch from step 112 passes execution to a subroutine indicated by the letter "D". The NO branch is taken where the user input was directed to some action other than manipulation of the display image appearing on display screen 22. The letter "R" indicates the return point from subroutines "M", "S", "St" and "D."

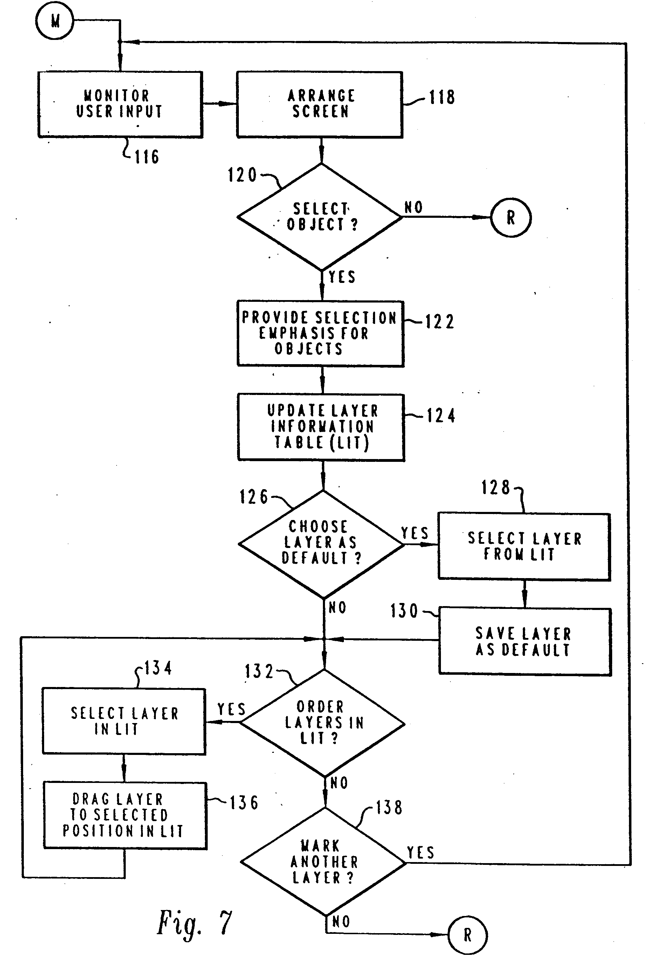

A user selection to mark a priority display layer through the mark subroutine is illustrated by the flowchart of Figure 7. Creation of a priority display layer is intended to provide a user immediate access to a group of functionally related objects, for example, an editor window and a printer. Upon entry to the subroutine, user inputs are monitored at step 116. Next, at step 118, a user may rearrange imageable member objects appearing on the display screen for purposes of the priority display layer. In other words, the display screen locations of imageable objects in the Z-axis ordering may differ from their positions in a priority display layer. For example, a user may wish to ensure that the printer icon is available when the user's mail window is brought to the surface. If, during use of the original screen the printer icon had been moved to a location where it was obscured by the mail window opening onto display screen 23, a special arrangement of objects in a priority display layer would ensure that the objects were free of one another upon surfacing of the layer.

Functional relationship between display image objects is a function of a user's requirements. At step 120, it is determined if the user has selected objects for inclusion in the surfaceable layer. If not, the NO branch from step 120 returns operation to the main routine of Figure 6 at the letter "R." The YES branch from step 120 leads to execution of step 122, where selection emphasis is applied to each object selected for inclusion in the surfaceable layer. Although step 122 is not shown as a loop, it will be understood by those skilled in the art that a plurality of objects may be selected for a priority display layer and that in use, the layer may include objects not in a display screen image.

A list of all priority display layers is maintained to allow quick access by a user to a desired layer. At step 124, a layer information table is updated to reflect creation of the new surfaceable layer. A priority display layer record will indicate all member objects and the positions of the objects for purposes of that layer. An imageable object may have a membership in more than one layer. One priority display layer may be selected as a default layer for immediate surfacing upon entry of the appropriate command during display of a base display screen image. If the user has indicated selection of a layer as the default layer, the YES branch from step 126 leads to step 128. At step 128, the prospective default layer is selected from the layer information table and at step 130 that layer is labeled as the default layer. Along the NO branch from step 126 or from step 130, decision step 132 is reached.

Priority display layers may be ordered, allowing a user to sequentially surface the layers upon selection of an appropriate command. At decision step 132 it is determined if a user has requested an ordering of the layers in the layer information table. If ordering has been selected, steps 134 and 136 along the YES branch from step 132 are executed. Entries in the list are exhibited in a window and may be reordered by dragging entries from one position to another within the list. Once ordering has been completed, or if no ordering is requested, the NO branch from step 132 is taken to step 138. At step 138, it is determined if the user wishes to mark another priority display layer. If not, the NO branch from step 138 returns operation to the point indicated by the letter "R" in Figure 6. The YES branch from step 138 returns operation to step 116 to await further user inputs.

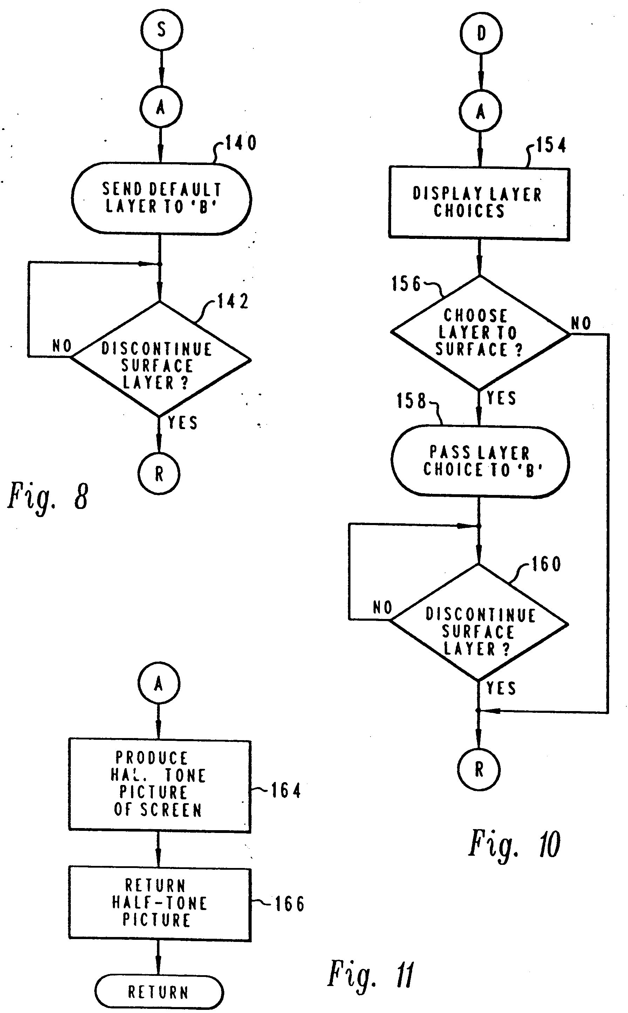

Figure 8 is a logical flowchart reflecting operation of the program upon a user request to surface the default priority display layer. Upon entry to the subroutine, a display image modification subroutine indicated by the letter "A" is executed. The modification subroutine is described in detail below with reference to Figure 11. Modification subroutine "A" returns a reduced representation of a display image. The term "reduced representation" refers to a modification of the display attributes of objects in the displayed image, including such modifications as a reduction to half-tones in colors or a conversion of the objects to a shadow format. At step 140, the default layer is sent to a subroutine labelled "B" for combination with the reduced representation of the original screen image. The default layer is combined with a reduced representation to form a new display image for the video display device. At step 142, it is determined if the user has elected to discontinue display of the priority display layer. If YES, the original display image is restored and operation is returned to the main routine at letter "R." The NO branch from step 142 loops operation back to step 142 to continue display of the priority display to maintain the merged image as user operations occur. It will be understood that the opened windows may reflect ongoing processes within a microcomputer, and that accordingly, updates to the window may occur from time to time. In addition, a user may elect use of direct manipulation techniques with respect to imageable objects from the default layer.

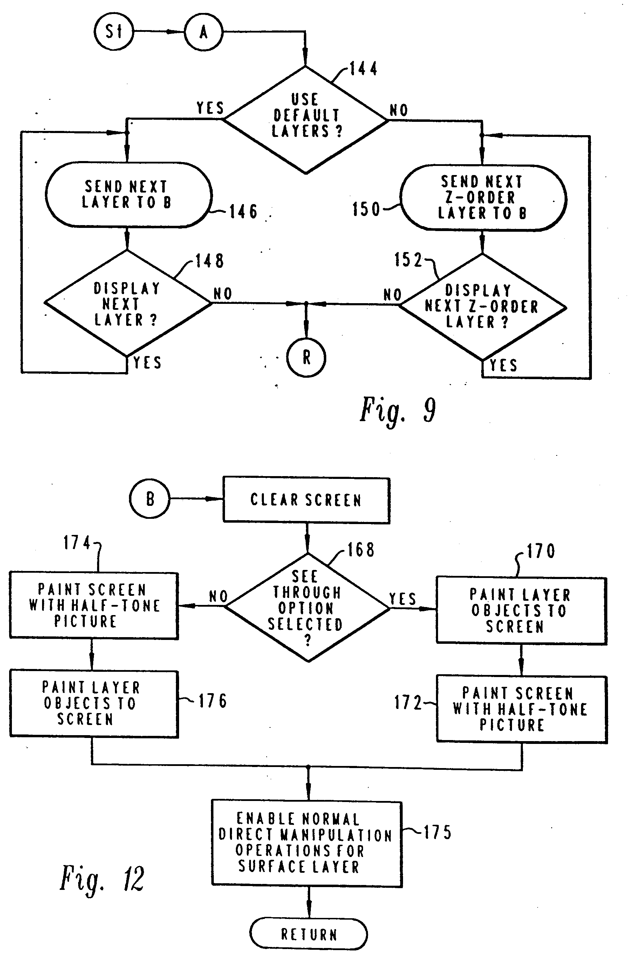

Figure 9 is a flowchart of operations relating to a subroutine for stepping through the list of priority display layers, or for stepping through the Z-ordering underlying the current display screen image. Upon entry to the routine, the present display screen image is converted to a reduced representation by calling the "A" subroutine. At step 144, it is determined whether the user has selected to step through the layer information table, indicated by the YES branch, or whether the user has selected to step through layers in the Z-ordering of the current display image. Steps 146 and 148 represent stepping through the priority display layers in the layer information table. Upon display of each layer, it is determined if the user has elected to display the next layer in the layer information table. If YES, the next layer in the list is sent to the subroutine indicated by letter "B" for merging with the reduced representation of the current display image. It is understood that if no more layers remain in the list, that the pointer into the list will be reset to the first item and that display of items in the list will restart at the beginning of the list. If the NO branch is selected at step 148, then operation is returned to the main routine at letter "R." Steps 150 and 152 reflect stepping through the Z-order axis underlying the current display image. Upon display of each layer, it is determined if the user has elected to display the next layer in the Z-order. Each time the user asks to display the next layer, each step in the process will result in the next layer being sent to subroutine "B" for merger with the reduced representation of the original display image. If no more layers remain in the Z-order list, the pointer into the list will be reset back to the first item in the list. If the user selects the "NO" branch at step 152, operation is returned to the main routine at letter "R." A user may elect use of direct manipulation techniques with respect to imageable objects in any displayed image while that image is being displayed.

Figure 10 is a logical flowchart illustrating a method for direct access of a surfaceable layer. Upon entry to the subroutine, subroutine "A" is called for generation of a reduced representation of the current display image. At step 154, a pop-up window is generated indicating the priority display layers available. At step 156, it is determined if a user has selected a layer for surfacing. If not, the NO branch is followed to the letter "R" for return to the main routine. If YES, at step 158 the selected layer is passed to subroutine "B" along with the reduced representation of the original display image for merger and generation of a new display image. At step 160, it is determined if the user has elected to discontinue display of the priority display layer. If YES, the original display image is restored and operation is returned to the main routine at letter "R." The NO branch from step 160 loops back to step 160 again to continue display of the priority display layer until the user chooses to exit from the routine.

Subroutines identified by the letters "A" and "B" will now be described with reference to Figures 11 and 12 respectively. Generation of a reduced representation of a display image occurs in steps 162, 164 and 166 of Figure 11. Initially, a picture of the screen is saved. At step 164, a half-tone representation of the screen image is generated. At step 166, the half-tone image is returned to the calling routine. Direct manipulation attributes of the objects imaged in the display image are suppressed. However, if a user has selected an object from the display image prior to entry into routine "A", that object will be carried into the new screen image in full-tone, available for direct manipulation. Deselection of such an object will, however, result in it falling back into half-tone representation.

The subroutine identified by the letter "B" merges a priority display layer with the reduced representation of a display image. Initially, at step 168, it is determined whether a user has selected the see-through option. The see-through option is that illustrated in Figure 4 above. If YES, at step 170 the priority display layer is painted to the screen. At step 172, the half-tone representation of the original display image is painted over the surfaceable layer. Thereafter, at step 175, normal direct manipulation operations for the objects of the priority display layer are enabled. The NO branch from step 168 results in execution of steps 174 and 176. Essentially steps 174 and 176 reflect an inversion in the order in which imageable objects are painted to the screen. At step 164, the screen is painted with the half-tone representation of the original display image. At step 176, the imageable objects of the surfaceable layer are painted to the screen over the half-tone representation. This operation results in a display image such as that depicted in Figure 5. Again, normal direct manipulation operations are enabled for all imageable objects of the priority display layer. Thereafter, operation is returned to the subroutine from which subroutine "B" was called.

The techniques disclosed herein eliminate numerous work steps previously required to manage windows and to obtain information from windows in a multi-window environment. The technique allows surfacing of a group of objects through the simple method of a depression of a key or mouse interaction. Essentially a user is enabled to navigate between layers to locate previously obscured information.

## Claims

1. A method of controlling display and direct manipulation of a plurality of imageable objects on a display screen of a visual display device in a computer system, the method comprising the steps of:
assigning each of the plurality of imageable objects a screen position and a Z-ordering position;
responsive to user selection, assigning at least a first imageable object to a surfaceable layer;
generating a display screen image from the screen positions and a Z-ordering positions of the imageable objects; and
responsive to user selection, surfacing the surfaceable layer by painting the surfaceable layer to the display screen in full-tone, painting a reduced representation of the display screen image to the display screen, and enabling direct manipulation of the imageable objects in the surfaceable layer.

2. A method of managing display and direct manipulation of a plurality of imageable objects on a display screen as set forth in Claim 1, wherein the display screen position of each imageable object in the surfaceable layer is user selectable.

3. A method of managing display and direct manipulation of a plurality of imageable objects as set forth in Claim 1 or 2, the method comprising the further step of:
responsive to user selection, releasing enablement of direct manipulation of the surfaced layer and repainting the display screen with the display screen image.

4. A method of managing display and direct manipulation of a plurality of imageable objects as set forth in Claim 1, 2 or 3, wherein the surfacing step further comprises first painting the surfaceable layer followed by painting the reduced representation over the surfaceable layer.

5. A method of managing display and direct manipulation of a plurality of imageable objects as set forth in Claim 1, 2 or 3, wherein the surfacing step further comprises first painting the reduced representation followed by painting the surfaceable layer over the reduced representation.

6. A method of managing display and direct manipulation of a plurality of imageable objects as set forth in Claim 1, 2, 3, 4 or 5 further comprising the steps of responsive to user selection, creating an ordered list of a plurality of surfaceable layers; and
allowing direct user selection of a particular surfaceable layer for surfacing.

7. A method of managing display and direct manipulation of a plurality of imageable objects as set forth in Claim 1, 2, 3, 4, 5 or 6 the method further comprising the step of, responsive to user selection, surfacing imageable objects in order of their Z-ordering positions.

8. A computer system for providing user control of display and direct manipulation of a plurality of imageable objects, the computer system comprising:
a user interface including a display surface;
means for assigning the plurality of imageable objects a display surface position and a position in a Z-axis ordering;
means responsive to the Z-axis ordering and the display surface position of the imageable objects for generating a first display image on the display surface, wherein each imageable object is included in the first display image to an extent that it is not overlapped by another imageable object having a superior position in the Z-axis ordering;
means for identifying a surfaceable layer comprising at least a first imageable object; and
means responsive to user selection for generating a second display image on the display surface, the second display image including the surfaceable layer and a representation of the first display image wherein the imageable objects of the surfaceable layer are enabled for direct manipulation and are not visually obscured by the imageable objects in the first display image.

9. A computer system for providing user control of display and direct manipulation of a plurality of imageable objects as set forth in Claim 8, wherein in the second display image, the representation of the first display image is in half-tones and the surfaceable layer is painted over the representation.

10. A computer system for providing user control of display and access to direct manipulation of a plurality of imageable objects as set forth in Claim 8, wherein in the second display image, the representation of the first display image is in half-tones, and the representation is painted over the surfaceable layer.

11. A computer system for providing user control of display and direct manipulation of a plurality of imageable objects as set forth in Claim 8, 9 or 10 the computer system further comprising:
means, responsive to user selection, for restoring the first display image and disenabling direct manipulation of the imageable objects of the surfaceable layer.

12. A computer system for providing user control of display and direct manipulation of a plurality of imageable objects as set forth in Claim 8, 9, 10 or 11 the computer system further comprising:
means, responsive to user selection, for creating an ordered list of a plurality of surfaceable layers; and
means for surfacing a selected surfaceable layer from the ordered list.

13. A method of controlling display of a plurality of windows on a display surface, the method comprising steps performed by a computer system of:
identifying a priority display window;
generating display order for the plurality of windows including the priority display window;
responsive to the ordering, assigning a display space on the display surface to at least a first window;
responsive to user selection, assigning a display space to the priority display window and altering the appearance of all windows previously assigned any portion of the display space; and
enabling direct manipulation of the priority display window.

14. A method of managing display of a plurality of windows on a display surface as set forth in Claim 13, wherein the step of assigning a display space to the priority display window, responsive to user selection, includes painting a half-tone image of the windows previously assigned display space on the display surface, then painting a full-tone image of the priority display window over the half-tone image.

15. A method of managing display of a plurality of windows on a display surface as set forth in Claim 13 wherein the step of assigning a display space to the priority display window includes painting a full-tone image of the priority display window, then painting a half-tone image of the windows previously assigned display space on the display surface.

16. A method of managing display of a plurality of windows on a display surface as set forth in Claim 13, 14 or 15 the method further comprising steps performed by a computer system of:
identifying at least a first imageable object for display with the priority display window; and
assigning display space to the first imageable object responsive to a user request to surface the priority display window.
